# EUROPEAN PATENT APPLICATION

(11) **EP 2 915 794 A1**
(43) Date of publication of application: **09.09.2015**
(21) Application number: 15155665.1
(22) Date of filing: 18.02.2015
(51) Int. Cl.: C04B 35/83, C04B 38/00, F16D 65/12, F16D 69/02

(54) **Densification of carbon-carbon composite material with copna resin**

(30) Priority: 05.03.2014 US 201414198179
(71) Applicant: Honeywell International Inc., Morristown, NJ 07962-2245 (US)
(72) Inventor: Yates, Stephen, Morristown, NJ New Jersey 07962-2245 (US); Behnke, Mark E., Morristown, NJ New Jersey 07962-2245 (US); La Forest, Mark L., Morristown, NJ New Jersey 07962-2245 (US); Rateick, Richard, Morristown, NJ New Jersey 07962-2245 (US)
(74) Representative: Houghton, Mark Phillip

(57) **Abstract**

In one example, a method for forming a densified carbon-carbon composite material comprises infiltrating a carbon fiber preform with a monomer mixture for a condensed polynuclear aromatic (COPNA) resin; polymerizing and crosslinking the monomer mixture within the carbon fiber preform to form a crosslinked COPNA by subsequently heating the carbon fiber preform infiltrated with the monomer mixture to a polymerization temperature of the COPNA resin; and carbonizing the crosslinked COPNA resin within the carbon fiber preform by heating the crosslinked COPNA resin to a carbonization temperature to form the densified carbon-carbon composite material, wherein the carbonization temperature is greater than the polymerization temperature.

## Description

### TECHNICAL FIELD

The disclosure relates to carbon-carbon composite materials.

### BACKGROUND

Carbon fiber-reinforced carbon materials, also referred to as carbon-carbon (C-C) composite materials, are composite materials that include carbon fibers reinforced in a matrix of carbon material. The C-C composite materials can be used in many high temperature applications. For example, the aerospace industry employs C-C composite materials as friction materials for commercial and military aircraft, such as brake friction materials.

### SUMMARY

Devices, systems, and techniques for forming a carbon-carbon composite material are described herein. Example carbon-carbon composite materials resulting from the techniques are also described herein. To form the carbon-carbon composite material, a carbon fiber preform may be infiltrated with a monomer mixture for a condensed polynuclear aromatic (COPNA) resin, e.g., to densify the preform. Following infiltration, the monomer mixture may be polymerized and crosslinked by heating the preform and resin within the preform to or above the polymerization temperature of the resin. The polymerization and crosslinking of the COPNA resin transforms the liquid monomer mixture into a solid within the carbon fiber preform matrix. Once the crosslinked COPNA resin has been formed, the crosslinked resin within the preform may be carbonized by further heating the preform and crosslinked resin to the carbonization temperature of the resin, which is greater than the polymerization temperature. By utilizing a COPNA resin with a polymerization temperature below that of the carbonization temperature, the liquid monomer mixture for the COPNA resin may be solidified within the preform matrix following infiltration prior to carbonizing the resin. In some examples, the resulting densified C-C composite material may be used as a friction material, e.g., as an aircraft brake disc.

In one aspect, the disclosure is directed to a method for forming a densified carbon-carbon composite material. The method comprises infiltrating a carbon fiber preform with a monomer mixture for a condensed polynuclear aromatic (COPNA) resin, the monomer mixture comprising a precursor polynuclear aromatic compound, a formaldehyde precursor or analog, and at least one of an acid catalyst precursor or acid anhydride catalyst precursor; polymerizing and crosslinking the monomer mixture within the carbon fiber preform to form a crosslinked COPNA resin by subsequently heating the carbon fiber preform infiltrated with the monomer mixture to a polymerization temperature of the COPNA resin; and carbonizing the crosslinked COPNA resin within the carbon fiber preform by heating the crosslinked COPNA resin to a carbonization temperature to form the densified carbon-carbon composite material, wherein the carbonization temperature is greater than the polymerization temperature.

In another aspect, the disclose is directed to a densified carbon-carbon composite material comprising a carbon fiber matrix defined by a carbon fiber preform; and a carbonized and crosslinked COPNA resin within the carbon fiber matrix, the carbonized and crosslinked COPNA resin formed from polymerization and crosslinking of a monomer mixture, the monomer mixture comprising a precursor polynuclear aromatic compound, a formaldehyde precursor or analog, and at least one of an acid catalyst precursor or acid anhydride catalyst precursor.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a schematic block diagram illustrating an example aircraft brake assembly.
FIG. 2 is a flow diagram illustrating an example method of forming a carbon-carbon composite material in accordance with aspects of this disclosure.
FIG. 3 is a schematic diagram illustrating a reaction to form an example crosslinked COPNA resin from a monomer mixture.
FIG. 4 is a polarized optical microscopy image of an example densified carbon-carbon material fabricated in accordance with aspects of this disclosure

### DETAILED DESCRIPTION

Example techniques for forming a carbon-carbon composite material are described herein, along with carbon-carbon composite materials and structures formed using such techniques. To form the carbon-carbon composite material, a carbon fiber preform may be infiltrated with a monomer mixture for a COPNA resin, e.g., to densify the preform. Following infiltration, the monomer mixture may be polymerized and crosslinked by heating the preform and resin within the preform to or above the polymerization temperature of the resin. The polymerization and crosslinking of the COPNA resin transforms the liquid monomer mixture into a solid within the carbon fiber preform matrix. Once the crosslinked COPNA resin has been formed, the crosslinked resin within the preform may be carbonized by further heating the preform and crosslinked resin to the carbonization temperature of the resin, which is greater than the polymerization temperature. By utilizing a COPNA resin with a polymerization temperature below that of the carbonization temperature, the liquid monomer mixture for the COPNA resin may be solidified within the preform matrix following infiltration prior to carbonizing the resin. In some examples, the resulting densified C-C composite material may be used as a friction material, e.g., as an aircraft brake disc.

Densified C-C composite materials used, for example, in aerospace applications such as brake pads, may be formed from carbon fiber preforms that have been densified using a variety of densification techniques. For example, a carbon fiber preform may be densified by infiltrating the preform with liquid pitch using vacuum pressure infiltration (VPI) and/or resin transfer molding (RTM) followed by carbonization of the pitch to achieve a C-C composite material exhibiting a desired final density. In the case of an aircraft brake pad, in some examples, the carbonized preform may take the form of an annular ring, although other shapes (e.g., non-annular segments) may also be used.

In some examples employing pitch infiltration, a pitch resin precursor is forced into a carbon fiber preform either by VPI or RTM. The resulting pitch infiltrated preform may be stabilized using air before carbonizing the pitch, e.g., by heating the pitch infiltrated preform, to make the carbon composite. Such stabilization may be required prior to heating the pitch infiltrated preform for carbonization to prevent the melting of the pitch during the temperature ramp for carbonization. This melting may reduce the viscosity of the pitch resin causing the pitch resin to ooze out of the preform prior to the reaching the carbonization temperature of the pitch. Additionally or alternatively, the pitch resin may volatilize during the temperature ramp-up for carbonization of the pitch, which may cause the resulting C-C composite material to crack

In accordance with one or more examples of the disclosure, a C-C composite material may be formed by infiltrating a carbon fiber preform with a liquid COPNA resin to densify the preform. A COPNA resin may include a precursor polynuclear aromatic compound, a formaldehyde precursor or analog, and at least one of an acid catalyst precursor or acid anhydride catalyst precursor. Following infiltration the carbon fiber preform and COPNA resin may be heated to or above the temperature at which the liquid resin crosslinks to form a solid resin composition within the carbon-fiber preform matrix. Once substantially all the liquid resin has been crosslinked, the infiltrated preform may be raised to or above the temperature at which the crosslinked COPNA resin carbonizes to form a densified C-C composite material.

As described below, the particular composition of the monomer mixture and resulting COPNA resin may be selected such that the components of the mixture all substantially melt and dissolve to form a liquid with a viscosity suitable for infiltration into a carbon fiber preform using, for example, VPI and/or RTM. The monomer mixture composition may exhibit such a viscosity, while also not volatizing, at a temperature below that of the polymerization temperature of the COPNA resin composition. Further, the composition of the monomer mixture may be selected such that the monomers polymerize and crosslink at a temperature below the temperature at which the resin carbonizes. In this manner, the liquid monomer mixture for forming the crosslinked COPNA resin may be infiltrated into to a carbon fiber preform for densification and subsequently carbonized without, e.g., the crosslinked COPNA resin oozing out of the carbon fiber preform prior to carbonization and/or volatilizing during the temperature ramp-up to the carbonization temperature.

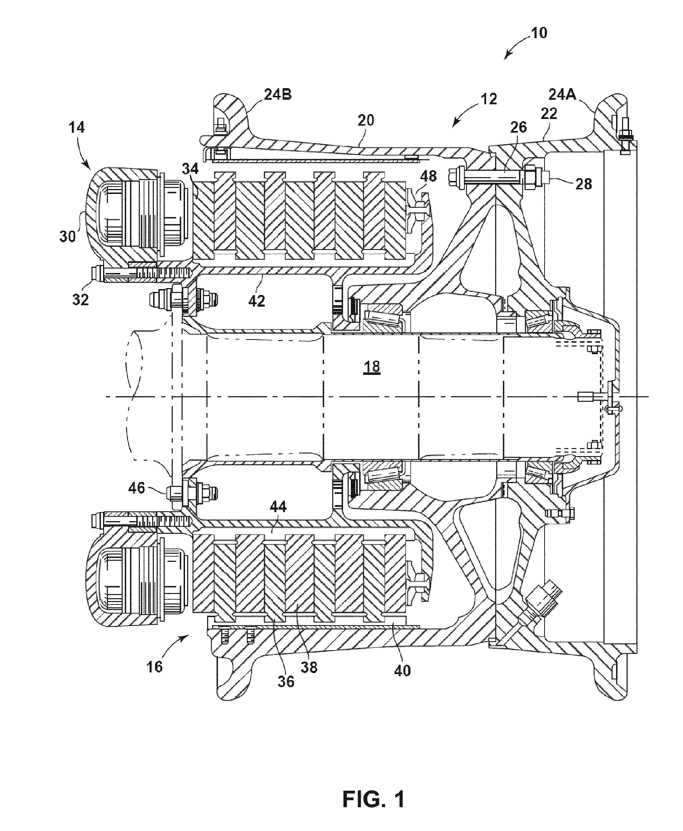

FIG. 1 is a conceptual diagram illustrating an example assembly 10 that may include one or more C-C composite material components formed in accordance with the techniques of this disclosure. For ease of description, examples of the disclosure will be described primarily with regard to aircraft brake discs formed of C-C composite materials. However, the C-C composite materials of this disclosure may be used to form parts other than aircraft brake discs. For example, the C-C composite material may be used a friction material in other types of braking applications, as well as in other applications such as, e.g., heat exchangers and heat shields.

In the example of FIG. 1, aircraft brake assembly 10 includes wheel 12, actuator assembly 14, brake stack 16, and axle 18. Wheel 12 includes wheel hub 20, wheel outrigger flange 22, bead seats 24A and 24B, lug bolt 26, and lug nut 28. Actuator assembly 14 includes actuator housing 30, actuator housing bolt 32, and ram 34. Brake stack 16 includes alternating rotor discs 36 and stator discs 38; rotor discs 36 are configured to move relative to stator discs 38. Rotor discs 36 are mounted to wheel 12, and in particular wheel hub 20, by beam keys 40. Stator discs 38 are mounted to axle 18, and in particular torque tube 42, by splines 44. Wheel assembly 10 may support any variety of private, commercial, or military aircraft.

Wheel assembly 10 includes wheel 18, which in the example of FIG. 1 is defined by a wheel hub 20 and a wheel outrigger flange 22. Wheel outrigger flange 22 is mechanically affixed to wheel hub 20 by lug bolts 26 and lug nuts 28. Wheel 12 defines bead seals 24A and 24B. During assembly, an inflatable tire (not shown) may be placed over wheel hub 20 and secured on an opposite side by wheel outrigger flange 22. Thereafter, lug nuts 28 can be tightened on lug bolts 26, and the inflatable tire can be inflated with bead seals 24A and 24B providing a hermetic seal for the inflatable tire.

Wheel assembly 10 may be mounted to an aircraft via torque tube 42 and axle 18. In the example of FIG. 1, torque tube 42 is affixed to axle 18 by a plurality of bolts 46. Torque tube 42 supports actuator assembly 14 and stators 38. Axle 18 may be mounted on a strut of a landing gear (not shown) to connect wheel assembly 10 to an aircraft.

During operation of the aircraft, braking may be necessary from time to time, such as during landing and taxiing. Wheel assembly 10 is configured to provide a braking function to an aircraft via actuator assembly 14 and brake stack 16. Actuator assembly 14 includes actuator housing 30 and ram 34. Actuator assembly 14 may include different types of actuators such as one or more of, e.g., an electrical-mechanical actuator, a hydraulic actuator, a pneumatic actuator, or the like. During operation, ram 34 may extend away from actuator housing 30 to axially compress brake stack 16 against compression point 48 for braking.

Brake stack 16 includes alternating rotor discs 36 and stator discs 38. Rotor discs 36 are mounted to wheel hub 20 for common rotation by beam keys 40. Stator discs 38 are mounted to torque tube 42 by splines 44. In the example of FIG. 1, brake stack 16 includes four rotors and five stators. However, a different number of rotors and/or stators may be included in brake stack 16 in other examples. Further, the relative positions of the rotors and stators may be reverse, e.g., such that rotor discs 36 are mounted to torque tube 42 and stator discs 38 are mounted to wheel hub 20.

Rotor discs 36 and stator discs 38 may provide opposing friction surfaces for braking an aircraft. As kinetic energy of a moving aircraft is transferred into thermal energy in brake stack 16, temperatures may rapidly increase in brake stack 16, e.g., beyond 200 degrees Celsius. With some aircraft, emergency braking (e.g., rejected takeoff) may result in temperatures in excess of 500 degrees Celsius, and in some cases, even beyond 800 degrees Celsius. As such, rotor discs 36 and stator discs 38 that form brake stack 16 may include robust, thermally stable materials capable of operating at such temperatures.

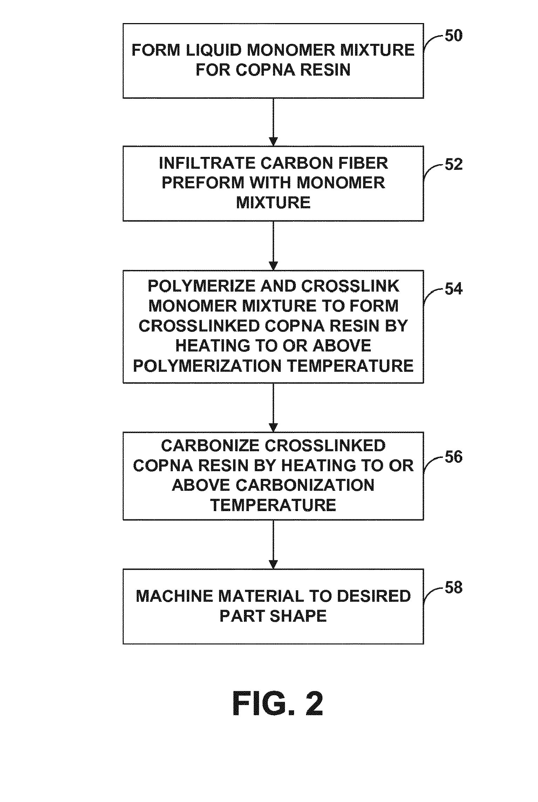

In one example, rotor discs 36 and/or stator discs 38 are formed of a C-C composite material fabricated according to one or more example techniques of this disclosure (e.g., the technique described with respect to FIG. 2). In particular, at least one of rotor discs 36 and/or at least one of stator discs 38 may be formed from densified C-C material fabricated via one or more of the example techniques of this disclosure. Rotor discs 36 and stator discs 38 may be formed of the same materials or different materials. For example, wheel assembly 10 may includes metal rotor discs 36 and C-C composite stator discs 38, or vice versa. Further, each disc of the rotor discs 36 and/or each disc of the stator discs 38 may be formed of the same materials or at least one disc of rotor discs 36 and/or stator discs 38 may be formed of a different material than at least one other disc of the rotor discs 36 and/or stator discs 38.

As briefly noted, in some examples, rotor discs 36 and stator discs 38 may be mounted in wheel assembly 10 by beam keys 40 and splines 44, respectively. In some examples, beam keys 40 may be circumferentially spaced about an inner portion of wheel hub 20. Beam keys 40 may, for example, be shaped with opposing ends (e.g., opposite sides of a rectangular) and may have one end mechanically affixed to an inner portion of wheel hub 20 and an opposite end mechanically affixed to an outer portion of wheel hub 20. Beam keys 40 may be integrally formed with wheel hub 20 or may be separate from and mechanically affixed to wheel hub 20, e.g., to provide a thermal barrier between rotor discs 36 and wheel hub 20. Toward that end, in different examples, wheel assembly 10 may include a heat shield (not shown) that extends out radially and outwardly surrounds brake stack 16, e.g., to limit thermal transfer between brake stack 16 and wheel 12.

In some examples, splines 44 may be circumferentially spaced about an outer portion of torque tube 42. Splines 44 may, for example, be integrally formed with torque tube 42 or may be separate from and mechanically affixed to torque tube 42. In some examples, splines 44 may define lateral grooves in torque tube 42. As such, stator discs 38 may include a plurality of radially inwardly disposed notches configured to be inserted into a spline.

Because beam keys 40 and splines 44 may be in thermal contact with rotor discs 36 and stator discs 38, respectively, beam keys 40 and/or splines 44 may be made of thermally stable materials including, e.g., those materials discussed above with respect to rotor discs 36 and stator discs 38. Accordingly, in some examples, example techniques of the disclosure may be used to form a beam key and/or spline for wheel assembly 10.

The example assembly 10 shown in FIG. 1 is merely one example. In other examples, assembly 10 and the components of assembly 10 (e.g., wheel 10, actuator assembly 14, brake stack 16, and axle 18) may have another suitable configuration. In addition, in other examples, the C-C composite materials described herein may be used to form other structures in addition to, or instead of, one or more of discs 36, 38, keys 40, and spline 44.

FIG. 2 is a flow diagram illustrating an example technique of forming a C-C composite body in accordance with aspects of the disclosure. In particular, the techniques include forming a densified C-C composite material from which the desired C-C composite body may be fabricated. It can be desirable to densify the C-C composite material in order improve the thermal conductivity of the material, in some cases, as the density of the C-C composite material increases, the better the material conducts heat, and the better the material acts as a heat sink.

As shown in FIG. 2, a suitable liquid monomer mixture for forming a COPNA resin may be formed using one of more suitable techniques (50). The liquid monomer mixture may then be infiltrated into a carbon fiber preform, e.g., by VPI and/or RTM (52). Following infiltration, the liquid monomer mixture within the carbon fiber preform matrix may be polymerized and crosslinked by heating the liquid monomer mixture to a temperature at or above the polymerization temperature of the resin (54). As described herein, the COPNA resin may be configured to exhibit a polymerization temperature that is below the carbonization temperature of the resin, e.g., to allow the liquid monomer mixture to solidify within the carbon fiber preform matrix prior to carbonization.

Once the infiltrated preform is maintained at or above the polymerization temperature for an amount of time sufficient to substantially complete the crosslinking of the liquid resin (54), the crosslinked COPNA resin within the carbon fiber matrix may be carbonized by further heating to a temperature at or above the carbonization temperature of the crosslinked resin (56). Once the carbonization is completed, the resulting densified carbon composite material formed from the carbon fiber preform and COPNA resin may be machined to exhibit the desired shape and dimensions of the component the material is being used to form (58). For example, the C-C material may be machined to a size and shape for use in aircraft wheel assembly 10 (FIG. 1), e.g., as rotor discs 36 and/or stator discs 38. However, other application for the material manufacture according to the example techniques described herein are contemplated.

In some examples, following carbonization and prior to or after machining, the resulting carbon composite material may undergo one or more cycles of carbon vapor infiltration (CVI) and/or carbon vapor deposition (CVD) to further densify the material to a desired level, e.g., by filling the voids left from gas evolution during the crosslinking and carbonization processes.

The composition of the monomer mixture for forming the COPNA resin may include a precursor polynuclear aromatic compound, a formaldehyde precursor or analog, and at least one of an acid catalyst precursor or acid anhydride catalyst precursor. To form the liquid monomer mixture (50), the individual components may be mixed or otherwise added to each other to form a liquid mixture with a substantially uniform composition. In some examples, one or more of the components may be a solid at the temperature at which the components are initially mixed. In such cases, following mixing of the one or more components, the mixture may be then be heating to a temperature at or above the softening point of each of the components to form a liquid monomer mixture. Further, the composition of the monomer mixture may be selected such that the softening point temperature is less than that of the polymerization temperature of the composition and less than that of the temperature at which the crosslinking agent (or other component) volatilizes.

As noted above, example COPNA resins may include one or more precursor polynuclear aromatic compounds. Suitable precursor polynuclear aromatic compounds for a COPNA resin include compounds having at least two fused aromatic rings, such as, e.g., three or more fused aromatic rings. The precursor polynuclear aromatic compound or mixture of polynuclear aromatic compounds may have a melting or softening point which is below the polymerization temperature of the composition. Mixtures of chemical compounds may have melting or softening points lower than any of the pure compounds which make up the mixture, which may be referred to as eutectic behavior. Thus, in some examples, the monomer mixture may include multiple polynuclear aromatic compounds instead of any single compound to lower the melting of softening point of the monomer mixture, e.g., below the polymerization temperature of the monomer mixture. The greater the number of aromatic rings in constituents of the mixture, the greater the likelihood that the aromatic rings will orient before or during polymerization, generating a desirable asymmetry in the composite. Example precursor polynuclear aromatic compounds include anthracene, pyrene, and the like. In some examples, the source of precursor polynuclear aromatic compounds in the resin composition may be from coal tar pitch or other suitable pitch containing a relative high level of precursor polynuclear aromatic compounds.

Example monomer mixtures of this disclosure for forming a COPNA resin may also include a formaldehyde precursor or analog that acts as a crosslinking agent for precursor polynuclear aromatic compounds of the resin in the presence of an acid catalyst precursor and/or acid anhydride catalyst precursor also present in the resin composition. Formaldehyde analogs include acetals, hemiacetals, aminals and hemiaminals of formaldehyde. Acetals and hemiacetals include in their chemical structure the grouping -O-CH2-O-, while aminals and hemiaminals include the grouping N-CH2-N-. Analogs also include aromatic compounds bearing as substituents at least two of the group -CH2OH, since this group will react with polynuclear aromatic compounds in a similar way to formaldehyde. Example formaldehyde precursor(s) or analog(s) include trioxane (e.g., 1,3,5-trioxane), paraformaldehyde, and benzenedimethanol (e.g., 1,4-benzenedimethanol) and hexamethylenetetramine. In some examples, benzenedimethanol may be preferred to that of trioxane due to the lower boiling point of benzenedimethanol.

Example acid catalyst precursors include organic sulfonic acids, such as, e.g., p-toluenesulfonic acid and methanesulfonic acid. In some examples, organic phosphonic acids may be utilized. Example acid anhydride catalyst precursors include phthalic anhydride or other anhydrides with sufficient thermal stability may be substituted for the acid to delay catalysis until after infiltration into a carbon fiber preform. In some examples, the acid may a strong acid (e.g., one that fully dissociates in water), and where the boiling point of the acid be substantially above the polymerization temperature. In some examples, the acid may have some miscibility in the mixture of the polynuclear aromatic compound and formaldehyde analog, which may dictate the selection of organic sulfonic acids.

The addition of the crosslinking agent and acid/acid anhydride catalyst to the precursor polynuclear aromatic compounds converts the precursor polynuclear aromatic compounds into a polymer that may be thermoset by polymerization and crosslinking. As noted above, following the polymerization and crosslinking of the liquid monomer mixture to form a crosslinked COPNA resin, the crosslinked resin should not melt and/or volatize when the temperature is increased to carbonize the crosslinked COPNA resin within the carbon fiber preform matrix.

The components of the monomer mixture and COPNA resin may be present in any suitable concentration. In general, the particular composition of the monomer mixture may be selected to provide for a monomer mixture having properties which allows the techniques of this disclosure to be employed to form a C-C composite material. Such properties include a monomer mixture that: exhibits a melting point below the polymerization temperature of the resin as well as a viscosity below the polymerization temperature that allows for infiltration of the liquid monomer mixture into a carbon fiber preform; exhibits a polymerization temperature below the carbonization temperature to allows for the COPNA resin to solidify and thermoset before carbonization; and provides for a desired carbon yield following carbonization of the crosslinked resin. In one example, the composition of the monomer mixture may be selected to exhibit a melting point below approximately 100 degrees Celsius, a crosslinking temperature between approximately 185 degrees Celsius and approximately 200 degrees Celsius, a carbonization temperature above approximately 300 degrees Celsius, and a carbon yield of above approximately 70 percent.

Each of these properties may be varied by changing the concentration of the components forming the monomer mixture. In some examples, the monomer mixture may include polynuclear aromatic compounds and formaldehyde precursor or analog, with a weight ratio of formaldehyde analogs to polynuclear aromatic compounds between approximately 0.2 and approximately 0.4 and a molar ratio of acid catalyst precursor and/or acid anhydride catalyst precursor to formaldehyde analogs above approximately 0.15.

As noted above, the liquid monomer mixture may provide for a composition that does not crosslink and exhibits a suitable viscosity prior to infiltration of the mixture into the carbon fiber preform. In some examples, the crosslinking reaction of the monomer mixture may be delayed by substituting an acid anhydride for the acid catalyst in the monomer mixture. The anhydrides delay the reaction relative to the acids because the anhydrides, after hydrolysis, form a weaker acid. The fact that they also consume the water byproduct shifts the equilibrium and may make them a stronger acid than, e.g., the corresponding carboxylic acids. For example, the water byproduct from the condensation polymerization occurring in infiltrated preform may hydrolyze the anhydride and promote further polymerization and crosslinking. Alternatively, the monomer mixture may include a mixture of acid and anhydride catalysts. In such an example, the anhydride may reduce the quantity of acid catalyst required to polymerize and crosslink the liquid monomer mixture within the carbon fiber preform.

In some examples, one or more additives may be added to the monomer mixture to vary the properties of the monomer mixture and resulting COPNA resin as desired. For example, one or more additives, such as pyrene, may be included in the liquid monomer mixture to increase the carbon yield of the composite material following carbonization of the crosslinked COPNA resin. As noted previously, the higher the percentage of larger polynuclear aromatic compounds, the higher the carbon yield. But this relationship may be subject to the constraint that the monomer mixture must melt or soften below the reaction temperature. Including multiple aromatic compounds in the monomer mixture may help address this constraint due to the eutectic effect. If the mixture melts or softens at a lower temperature, the mixture may also be less viscous.

After forming the liquid monomer mixture exhibiting a desirable viscosity (50), a porous carbon fiber preform may be infiltrated with the liquid monomer composition (52). Any suitable carbon fiber preform may be used. In some examples, the carbon fiber preform may be formed by needling together a plurality of sections of carbon fiber precursor material, such as polyacrylonitrile (PAN) or rayon, and carbonizing the carbon fiber precursor material to form a carbonized preform, e.g., via heat treatment. Alternatively or additionally, the preform may be formed of carbonized materials such as carbonized fabrics formed of carbonized fibers, such as, e.g., carbonized PAN fibers, which may be needled together to form a carbonized carbon fiber preform.

The carbon fiber preform may be infiltrated with the liquid monomer mixture using any suitable technique. In some examples, the carbon fiber preform may be infiltrated with liquid monomer mixture (52) using one or more cycles of vacuum pressure infiltration (VPI) and/or resin transfer molding (RTM). Examples of RTM include those examples described in U.S. Patent No. 6,537,470 to Wood et al., the entire content of which is incorporated by reference herein. In other examples, depending on the viscosity of the liquid monomer mixture, the carbon fiber preform may be infiltrated with the mixture by immersion of the preform within the liquid monomer mixture.

In some examples of VPI, the carbon fiber preform is heated under inert conditions to well above the melting point of the monomer mixture. Thereafter, gas in the pores of the carbon fiber preform is removed by evacuating the preform. Finally, the liquid monomer mixture is allowed to infiltrate the pores of the preform, as the overall pressure is returned to one atmosphere or above. In the VPI process, a volume of liquid monomer mixture may be melted in one vessel while the porous carbon fiber composite preform is contained in a second vessel under vacuum. The liquid monomer mixture may then be transferred from vessel one into the porous preforms contained in the second vessel using a combination of vacuum and pressure. In some examples, the monomer mixture is injected at low temperature (e.g., about 50 degrees Celsius to about 150 degrees Celsius) using pressure or induced under vacuum, into the porous carbon fiber preform contained within the second vessel.

After the carbon fiber preform has been infiltrated with the liquid monomer mixture, the monomer mixture may be polymerized and crosslinked within the carbon fiber preform by heating the COPNA resin within the preform to or above the polymerization temperature of the COPNA resin (54). The polymerization temperature may refer to the temperature to overcome the activation energy to initiate the polymerization reaction (e.g., as described by the Arrhenius equation. To increase the rate at which the polymerization reaction takes place, the temperature may be increased above the polymerization temperature (e.g., for an increase of about 10 degrees Celsius, the rate of reaction may approximately double).

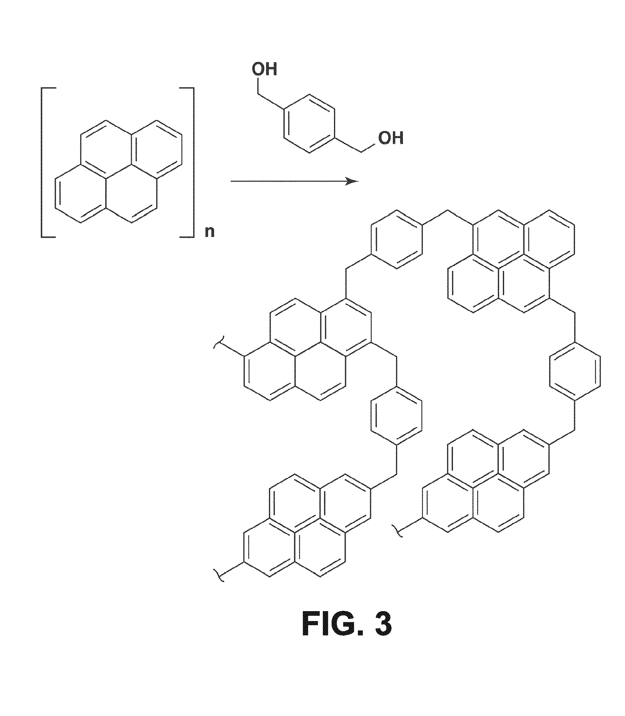

Polymerization and crosslinking of the liquid monomer mixture may be represented by the chemical reaction illustrated in FIG. 3, which illustrates an example of polymerizing and crosslinking of pyrene with 1,4-benzenedimethanol. This reaction can occur at multiple positions on pyrene or other polynuclear aromatic compounds, generating a three dimensional network of links between them.

Upon polymerization and crosslinking of the liquid monomer mixture by heating the infiltrated preform to or above the polymerization temperature of the COPNA resin for a sufficient period of time, e.g., a period of time sufficient to polymerize and crosslink the resin to function as described herein, the liquid monomer mixture transforms from a liquid to a solid, crosslinked COPNA resin within the carbon fiber preform matrix. Once the aromatic compound of the monomer mixture is polymerized to a COPNA resin, the resin is effectively immobile within the carbon fiber preform matrix. As noted above, the monomer mixture may be composed such that the temperature at which the polymerization reaction takes place is less than that of the temperature at which the composition carbonizes.

The crosslink density of the crosslinked COPNA resin within the preform matrix may be tailored, e.g., by varying the composition of the liquid COPNA resin. For example, the crosslink density may vary as a function of the ratio of crosslinking agent to precursor polynuclear aromatic compound. If the crosslink density is too high, the carbon formed during carbonization of the crosslinked resin may not be anisotropic. By decreasing the crosslink density, the ability of the liquid COPNA resin to reorganize into a mesophase structure may be increased, leading to the formation of carbon during carbonization of the crosslinked resin which is anisotropic.

Once the COPNA resin has been crosslinked within the carbon fiber preform, the crosslinked COPNA resin may be carbonized within the carbon fiber preform (e.g., by further raising the temperature of the crosslinked COPNA resin within the carbon fiber preform to or above the carbonization temperature of the COPNA resin). During carbonization, carbon-carbon bonds form between adjacent polynuclear aromatic compounds, with loss of hydrogen. In some cases, small molecules, such as methane, are also split out and evolved, and any remaining volatile materials evaporate. The result is the formation of a carbon with a largely graphitic structure. Graphite consists of flat and parallel planes of carbon which can be considered to be extremely large polynuclear aromatic compounds. When the graphite structure is well-formed, the structure will be referred to as anisotropic, because, when viewed under a microscope using polarized light, it polarizes the light reflected from the surface. Such anisotropic structures can be useful for some applications, such as brake discs, because they exhibit superior friction performance. Use of higher molecular weight polynuclear aromatic compounds may facilitate generation of anisotropy.

As noted above, following carbonization of the crosslinked COPNA resin within the carbon fiber preform (56), the carbonized preform may be densified with carbonaceous material using chemical vapor deposition (CVD)/chemical vapor infiltration (CVI). For example, the carbonized preform may undergo one or more cycles of CVD/CVI to fill voids in the preform resulting from gas evolution during the crosslinking and carbonization processes. The carbonized preform may undergo one or more cycles of CVD/CVI until the material exhibits a desired density. For example, such a material may exhibit a density between approximately 1.75 grams per cubic centermeter (g/cc) and approximately 1.90 g/cc.

In some examples of CVD/CVI, the carbonized preform is heated in a retort under the cover of inert gas, such as at a pressure below 100 torr. When the carbonized preform reaches a temperature between about 900 °C and about 1200 °C, the inert gas is replaced with a carbon-bearing gas such as natural gas, methane, ethane, propane, butane, propylene, or acetylene, or a combination of at least two of these gases. When the carbon-bearing gas flows around and through the carbonized preform, a complex set of dehydrogenation, condensation, and polymerization reactions occur, thereby depositing the carbon atoms within the interior and onto the surface of the carbonized preform. Over time, as more and more of the carbon atoms are deposited onto the surfaces of pores in the carbonized preform, the carbonized preform becomes more dense. This process may be referred to as densification, because the open spaces in the carbonized preform are eventually filled with a carbon matrix until generally solid carbon parts are formed. U.S. Patent Application Publication No. 2006/0046059 (Arico et al.), the entire disclosure of which is incorporated herein by reference, provides an overview of example CVD/CVI processing that can be used with the techniques described herein.

### EXAMPLE

To evaluate one or more aspects the disclosure, an example C-C composite material was fabricated using examples of the techniques described herein. In particular, a non-hardened, cylinder-shaped carbon fiber preform weighing approximately 46 grams was infiltrated, via VPI, with a liquid monomer mixture for forming a COPNA resin. The monomer mixture included approximately 54 grams of coal tar pitch, approximately 17 grams of pyrene, approximately 20 grams of 1, 4-benzenedimethanol, and approximately 5 grams of toluenesulfonic acid.

The coal tar pitch functioned as a source of aromatic carbon rings and exhibited a softening point temperature of approximately 110 degrees Celsius, which was low enough to allow all components of the resin composition to dissolve below the crosslinking temperature between approximately 185 to approximately 200 degrees Celsius. The pyrene was added to increase the carbon yield of the resin when carbonized and was added in the maximum amount within the solubility limit. The 1, 4-benzenedimethanol was added as a crosslinking agent and was non-volatile at the mixing temperature. The crosslink density of the crosslinked resin was determined by the ratio of 1, 4-benzenedimethanol to pitch plus pyrene. The toluenesulfonic acid was added as an acid catalyst, which was soluble in the melted pitch, and was also non-volatile at the mixing temperature

To form the monomer mixture, the coal tar pitch and pyrene were mixed and then heated to approximately 160 degrees Celsius to melt the mixture. The 1, 4-benzenedimethanol and toluenesulfonic acid were then added to the mixture and dissolved. The carbon fiber preform was then infiltrated, via VPI, with the liquid mixture within a chamber by first applying a vacuum followed by pressurizing the chamber to 100 psi with nitrogen gas. Once infiltrated with the liquid monomer mixture, the infiltrated carbon-fiber preform was heated to a temperature of approximately 220 degrees Celsius to polymerize and crosslink the monomer mixture to form a COPNA resin with the preform.

Following crosslinking of the COPNA resin, the infiltrated carbon fiber preform formed a hardened puck with approximately 91% yield compared to that of the theoretical yield for the polymerization reaction based on the weights of the starting material. The hardened puck was then cut in half, and one of the halves underwent carbonization using a standard char cycle. Based on the weight of the carbonized puck compared to that of the original weight (immediately prior to carbonization), a 72% yield based on pitch and pyrene in the COPNA resin was found. From other experiments, that weight of the pitch and pyrene would be approximately half that value had the carbon fiber preform simply be infiltrated with the monomers but not polymerized.

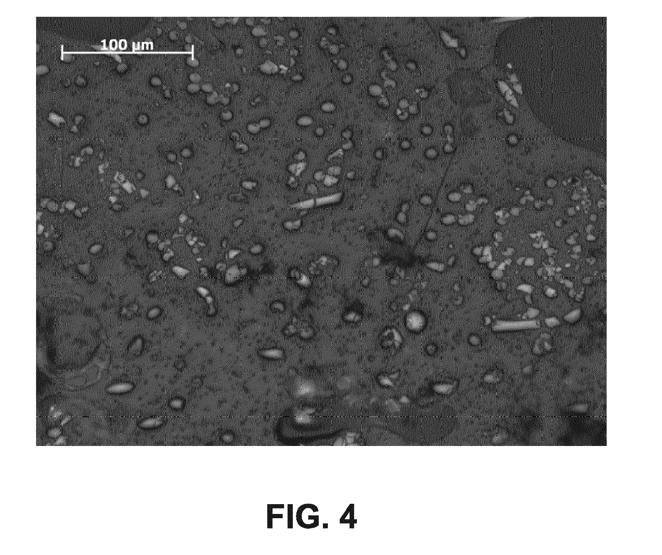

Polarized optical microscopy was used to measure the carbon morphology of the carbonized C-C material. FIG. 4 is an image a polarized optical microscopy image of the C-C composite material. As the anisotropic regions polarize light, those regions are shown in the image of FIG. 4 as differently shaded regions. As noted above, anisotropic morphology may provide better friction performance and higher thermal conductivity of the C-C composite material compared to isotropic morphology.

The image of FIG. 4 shows only relative small anisotropic regions. It is believed that the anisotropy of the material may be increased by reducing the crosslink density of the material, increasing the content of higher PNAs, and/or modifying the carbonization profile. Anisotropy occurs when the aromatic compounds are able to line up into flat planes before being "locked" in place by polymerization and carbonization. The compounds are more likely to line up in such a manner the larger the aromatic compound, and are more able to stack on each other that greater the ability to move, e.g., at lower crosslink densities. However, there must be enough crosslink density to prevent softening. Each of these factors may be considered to improve the anisotropy of the final material.

Various examples have been described. These and other examples are within the scope of the following claims.

## Claims

1. A method for forming a densified carbon-carbon composite material, the method comprising:
infiltrating a carbon fiber preform with a monomer mixture for a condensed polynuclear aromatic (COPNA) resin, the monomer mixture comprising a precursor polynuclear aromatic compound, a formaldehyde precursor or analog, and at least one of an acid catalyst precursor or acid anhydride catalyst precursor;
polymerizing and crosslinking the monomer mixture within the carbon fiber preform to form a crosslinked COPNA resin by subsequently heating the carbon fiber preform infiltrated with the monomer mixture to a polymerization temperature of the COPNA resin; and
carbonizing the crosslinked COPNA resin within the carbon fiber preform by heating the crosslinked COPNA resin to a carbonization temperature to form the densified carbon-carbon composite material, wherein the carbonization temperature is greater than the polymerization temperature.

2. The method of claim 1, wherein carbon fiber preform and crosslinked COPNA resin includes voids following the carbonization of the crosslinked COPNA resin, the method further comprising subsequently carbonizing the carbon fiber preform and crosslinked COPNA resin via at least one of carbon vapor infiltration (CVI) or carbon vapor deposition (CVD) to substantially fill the voids.

3. The method of claim 1, further comprising forming the monomer mixture prior to infiltration of the carbon fiber precursor, wherein forming the monomer mixture comprises:
mixing the precursor polynuclear aromatic compound, the formaldehyde precursor or analog, and the at least one of an acid catalyst precursor or acid anhydride catalyst precursor while in a solid state to form a substantially solid mixture; and
heating the substantially solid mixture to a melting temperature below the polymerization temperature to melt and dissolve the substantially solid mixture.

4. The method of claim 1, wherein the monomer mixture includes a pitch including the precursor polynuclear aromatic compound.

5. The method of claim 1, wherein the monomer mixture defines a mesophase structure prior to polymerization and crosslinking.

6. The method of claim 1, wherein the monomer mixture includes a weight ratio of formaldehyde analogs to polynuclear aromatic compounds of between approximately 0.2 and approximately 0.4.

7. The method of claim 1, wherein the at least one of an acid catalyst precursor or acid anhydride catalyst precursor comprises at least one of an organic sulfonic acid or phthalic anhydride.

8. The method of claim 1, wherein the formaldehyde precursor or analog comprises at least one of trioxane, paraformaldehyde, or dimethanol.

9. A densified carbon-carbon composite material comprising:
a carbon fiber matrix defined by a carbon fiber preform; and
a carbonized and crosslinked condensed polynuclear aromatic (COPNA) resin within the carbon fiber matrix, the carbonized and crosslinked COPNA resin formed from polymerization and crosslinking of a monomer mixture, the monomer mixture comprising a precursor polynuclear aromatic compound, a formaldehyde precursor or analog, and at least one of an acid catalyst precursor or acid anhydride catalyst precursor.

10. The composite material of claim 9, wherein the densified carbon-carbon composite material exhibits a density greater than approximately 1.7 grams per cubic centimeter.
